# FASCICULE DE BREVET EUROPEEN

(11) **EP 4 599 668 B1**
(45) Date de publication et mention de la délivrance du brevet: **21.10.2026**
(21) Numéro de dépôt: 25151924.5
(22) Date de dépôt: 15.01.2025
(51) Int. Cl.: A01K 1/00

(54) **SYSTÈME DE VERROUILLAGE POUR STRUCTURE AGRICOLE MOBILE ET PROCEDE UTILISANT UN TEL SYSTEME**
VERRIEGELUNGSSYSTEM FÜR EINE MOBILE LANDWIRTSCHAFTLICHE STRUKTUR UND VERFAHREN MIT EINEM SOLCHEN SYSTEM
LOCKING SYSTEM FOR A MOBILE AGRICULTURAL STRUCTURE AND METHOD USING SUCH A SYSTEM

(30) Priorité: 19.01.2024 FR 2400558
(43) Date de publication de la demande: 13.08.2025
(73) Titulaire: Tubex, 45300 Escrennes (FR)
(72) Inventeur: JOURDAIN, Dominique, 45300 Escrennes (FR)
(74) Mandataire: Cabinet Beau de Loménie

(56) Documents cités:
- GB-A- 2 495 495
- US-A- 1 135 004
- US-A- 1 243 838
- US-B2- 10 653 105

## Description

### Domaine Technique

Le présent exposé concerne un système de verrouillage pour structure agricole mobile, notamment pour barrière agricole de poussée de couloir de contention pour bétail, et un procédé de verrouillage utilisant un tel système.

### Technique antérieure

Dans le domaine de l'élevage, notamment des bovins, ovins, mais pas uniquement, il est connu d'utiliser des structures mobiles nécessitant des systèmes de verrouillage. Typiquement, des systèmes de contention formant un couloir de passage pour le bétail permettent aux éleveurs de canaliser les animaux et de les déplacer dans une direction donnée et vers une zone souhaitée, par exemple une zone de tri ou d'intervention. Pour ce faire, un tel couloir de contention comprend typiquement des parois latérales formant le couloir et empêchant les animaux de s'échapper, et une barrière de poussée transversale par rapport aux parois latérales et mobile par rapport à celles-ci. Les parois latérales peuvent par exemple comprendre des rails le long desquels des extrémités respectives de la barrière transversale peuvent coulisser. La barrière de poussée peut notamment être actionnée par l'éleveur qui, en faisant coulisser celle-ci le long des rails des parois latérales, pousse les animaux dans la direction souhaitée.

Afin d'assurer la sécurité d'utilisation pour l'éleveur, par exemple dans le cas d'un mouvement brusque d'un animal contre la barrière et dans la direction de l'éleveur, il est préférable de mettre en place un système de verrouillage de la barrière. Un tel système de verrouillage permet de verrouiller la barrière de poussée en des points donnés le long des rails, notamment par paliers, empêchant celle-ci de se déplacer davantage le long des rails. Typiquement, un système de verrouillage peut comprendre une poignée d'actionnement permettant de déplacer des taquets de verrouillage pour les insérer dans des orifices présents le long des rails, ou les extraire de ces orifices.

Le document GB2495495A divulgue une barrière agricole de poussée de couloir de contention pour bétail, avec un système de verrouillage.

Toutefois les systèmes de verrouillage existants ne sont pas entièrement satisfaisants. Certains systèmes comprennent par exemple un ressort de rappel poussant un taquet dans des orifices du rail au cours du déplacement de la barrière. Dans ce cas, il est nécessaire pour l'éleveur de maintenir une poignée d'actionnement tirée vers le bas pour maintenir les taquets en positions d'extractions des orifices afin d'éviter un verrouillage de la barrière lorsque celui-ci n'est pas nécessaire. Un tel système est peu commode pour l'éleveur et le contraint à pousser la barrière d'une main, et à maintenir la poignée de l'autre main, ce qui l'empêche donc d'atteindre manuellement les animaux de l'autre côté de la barrière si nécessaire (pour les pousser ou les déplacer manuellement par exemple).

A l'inverse, si l'éleveur ne maintient pas la poignée, le verrouillage se fait automatiquement à chaque palier, ce qui oblige l'éleveur à actionner la poignée à chaque palier pour déverrouiller la barrière et poursuivre sa poussée, et ne permet donc pas une utilisation en continue.

D'autres systèmes requièrent à l'inverse l'actionnement d'une poignée pour insérer des taquets dans les orifices du rail. Dans ce cas, il est nécessaire pour l'éleveur de repérer, lors du déplacement de la barrière de poussée, la position des orifices le long des rails afin de stopper la barrière en face de ces orifices et d'actionner alors la poignée pour insérer les taquets dans les orifices lorsqu'un verrouillage de la barrière est souhaité. Avec un tel fonctionnement, l'attention de l'éleveur est détournée des animaux, et une sécurité suffisante n'est pas assuré pour ce dernier pendant la poussée.

Il existe donc un besoin pour un système de verrouillage permettant d'améliorer la simplicité de manipulation pour l'éleveur, et d'améliorer la sécurité d'utilisation.

### Exposé de l'invention

Le présent invention concerne un système de verrouillage pour structure agricole mobile apte à se déplacer dans une direction longitudinale le long d'au moins un rail, le système de verrouillage étant configuré pour être solidaire en déplacement avec la structure agricole mobile, et comprenant au moins un cliquet apte à coopérer avec des orifices répartis le long du rail, le cliquet comprenant un premier rebord longitudinal et un deuxième rebord longitudinal, et étant configuré pour pivoter autour d'un premier axe de rotation, le système de verrouillage comprenant un levier d'actionnement mobile entre une première position dans laquelle il est apte à limiter une rotation du cliquet dans le sens antihoraire par contact du deuxième rebord contre le levier d'actionnement lors de la rotation dans le sens antihoraire, et une deuxième position dans laquelle il est apte à limiter une rotation du cliquet dans le sens horaire par contact du premier rebord contre le levier d'actionnement lors de la rotation dans le sens horaire.

En d'autres termes, le levier d'actionnement dans la première position permet un déplacement de la structure agricole mobile le long des rails dans un premier sens de déplacement, et un blocage du déplacement de ladite structure dans un deuxième sens de déplacement opposé au premier sens, du fait de la limitation de la rotation du cliquet dans le sens antihoraire.

En outre, le levier d'actionnement dans la deuxième position permet un déplacement de la structure agricole mobile le long des rails dans le deuxième sens de déplacement, et un blocage du déplacement de ladite structure dans le premier sens de déplacement du fait de la limitation de la rotation du cliquet dans le sens horaire.

On comprend ainsi que le cliquet peut être sélectivement verrouillé, par l'intermédiaire du levier d'actionnement, dans une première position permettant de pousser la structure agricole mobile dans un sens (vers l'avant), tout en bloquant son déplacement dans le sens opposé (vers l'arrière), ou dans une deuxième position permettant de tirer la structure agricole mobile vers l'arrière, tout en bloquant son déplacement vers l'avant.

Ainsi, dans le cas où la structure agricole mobile est par exemple une barrière de poussée de couloir de contention, après avoir choisi la position du levier d'actionnement (première ou deuxième position), l'éleveur peut donc pousser la structure agricole mobile vers l'avant, ou la tirer vers l'arrière, en continu (sans devoir actionner le verrouillage à chaque palier, ou libérer le cliquet à chaque palier) et en toute sécurité, tout en ayant ses deux mains libres pour pouvoir à la fois pousser (ou tirer) la structure agricole mobile et agir sur les animaux présents de l'autre côté de la structure agricole mobile. Le système de verrouillage permet ainsi d'améliorer la sécurité de l'éleveur, tout en permettant une utilisation pratique et efficace.

Dans certains modes de réalisation, le levier d'actionnement est fixé de manière mobile à un support fixe du système de verrouillage et est apte à passer de sa première position à sa deuxième position en pivotant par rapport au support fixe, autour d'un deuxième axe de rotation transversal au premier axe de rotation du cliquet.

Dans certains modes de réalisation, le système de verrouillage comprend un premier moyen de calage apte à recevoir une portion du levier d'actionnement lorsque ce dernier est dans sa première position, et un deuxième moyen de calage apte à recevoir la portion du levier d'actionnement lorsque ce dernier est dans sa deuxième position, le premier et le deuxième moyen de calage étant aptes à limiter une rotation du levier d'actionnement autour du deuxième axe de rotation.

Dans certains modes de réalisation, le support fixe comprend une plaque de maintien fixée à une base du support fixe, une portion du levier d'actionnement étant logée dans un espace formé entre la plaque de maintien et la base du support fixe, la plaque de maintien étant apte à limiter un mouvement ascendant de la portion du levier d'actionnement.

Dans certains modes de réalisation, le levier d'actionnement est apte à être positionné dans une troisième position dans laquelle il est apte à limiter une rotation du cliquet à la fois dans le sens horaire et dans le sens anti horaire.

Dans certains modes de réalisation, le système de verrouillage comprend un troisième moyen de calage apte à recevoir la portion du levier d'actionnement lorsque ce dernier est dans sa troisième position, le troisième moyen de calage étant apte à limiter une rotation du levier d'actionnement autour du deuxième axe de rotation.

Dans certains modes de réalisation, le cliquet comprend une portion amincie apte à pénétrer au moins en partie dans les orifices du rail, et une portion élargie apte à coopérer avec une extrémité du levier d'actionnement et comprenant le premier rebord longitudinal et le deuxième rebord longitudinal.

Dans certains modes de réalisation, le levier d'actionnement comprend une portion verticale comprenant une poignée d'actionnement, et une portion horizontale dont une extrémité est apte à coopérer avec le cliquet.

Dans certains modes de réalisation, l'extrémité de la portion horizontale du levier d'actionnement est une extrémité évasée, une largeur de l'extrémité évasée étant plus importante que le reste de ladite portion horizontale.

Le présent invention concerné également un ensemble comprenant deux rails parallèles entre eux, une structure agricole mobile, un portique portant la structure agricole mobile et étant mobile en translation le long des rails dans une direction longitudinale, et au moins un système de verrouillage selon l'un quelconque des modes de réalisation précédents, le cliquet étant fixé de manière mobile en rotation par rapport audit portique.

Dans certains modes de réalisation, le portique comprend un premier montant longitudinal coopérant avec l'un des deux rails en étant apte à translater par rapport audit rail, le levier d'actionnement étant fixé de manière mobile à un support fixe, le support fixe et le cliquet étant fixés audit premier montant horizontal.

Dans certains modes de réalisation, le portique comprend un deuxième montant longitudinal parallèle au premier montant longitudinal et comprenant un premier, un deuxième et un troisième moyen de calage apte à recevoir une portion du levier d'actionnement lorsque ce dernier est respectivement dans sa première, sa deuxième et sa troisième position.

Dans certains modes de réalisation, la structure agricole mobile est une barrière de poussée de couloir de contention.

Le présent invention concerné également un procédé de verrouillage d'une structure agricole mobile utilisant un système de verrouillage selon l'un quelconque des modes de réalisation précédents, le procédé comprenant le déplacement de la structure agricole mobile dans une direction longitudinale le long d'au moins un rail, et le verrouillage de la structure agricole mobile en actionnant le levier d'actionnement dans sa première position de manière à permettre un déplacement de la structure agricole mobile le long du rail dans un premier sens de déplacement et à bloquer son déplacement dans un deuxième sens de déplacement opposé au premier sens, ou dans sa deuxième position de manière à permettre le déplacement de la structure agricole mobile le long du rail dans le deuxième sens de déplacement et à bloquer son déplacement dans le premier sens.

Dans certains modes de réalisation, l'actionnement du levier d'actionnement comprend le fait de pousser une portion verticale du levier d'actionnement vers le haut dans une direction verticale perpendiculaire à la direction longitudinale de manière à extraire une portion horizontale du levier d'actionnement de l'un d'un premier ou d'un deuxième moyen de calage, puis de déplacer le levier d'actionnement dans la direction longitudinale vers l'autre du premier ou du deuxième moyen de calage, puis à relâcher le levier d'actionnement de manière à positionner la portion horizontale du levier d'actionnement dans ledit autre du premier ou du deuxième moyen de calage.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue globale en perspective d'un ensemble selon le présent exposé, notamment un couloir de contention ;
[Fig. 2] La figure 2 représente une vue de face de l'ensemble de la figure 1 ;
[Fig. 3] La figure 3 représente une vue rapprochée en perspective d'une partie de l'ensemble de la figure 1, notamment un système de verrouillage selon le présent exposé ;
[Fig. 4] La figure 4 représente en perspective le système de verrouillage de la figure 3, sous un angle différent ;
[Fig. 5] La figure 5 représente en perspective le système de verrouillage avec le levier d'actionnement dans une première position de verrouillage ;
[Fig. 6] La figure 6 représente en perspective le système de verrouillage avec le levier d'actionnement dans une deuxième position de verrouillage ;
[Fig. 7] La figure 7 représente en perspective le système de verrouillage avec le levier d'actionnement dans une troisième position de verrouillage.

### Description des modes de réalisation

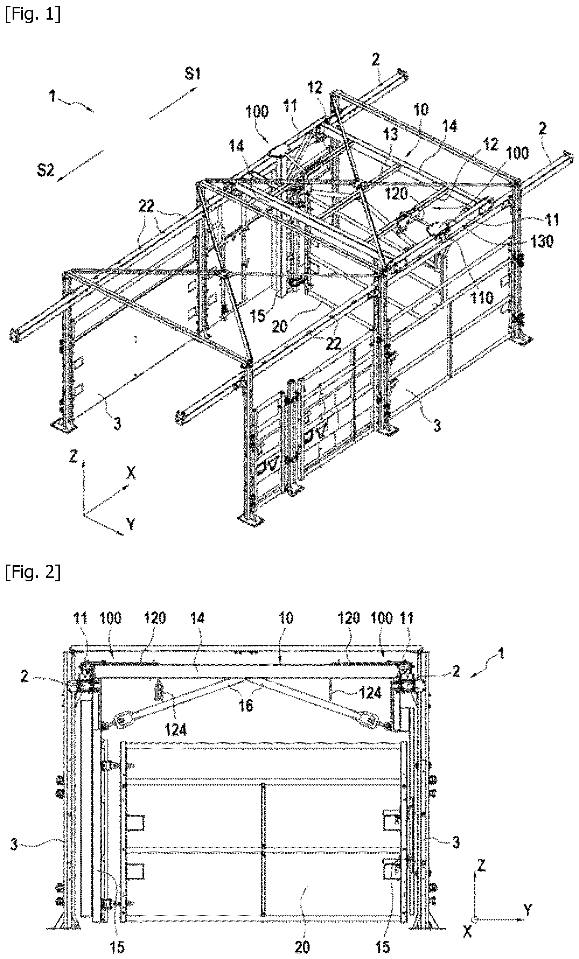

La figure 1 représente une vue en perspective d'un ensemble 1 selon l'invention dans un repère XYZ, où X est une direction longitudinale, Y une direction transversale, et Z une direction verticale. La figure 2 est une vue de face de l'ensemble 1 de la figure 1 dans une vue de face selon la direction longitudinale X, et perpendiculaire au plan YZ.

On comprendra que dans la suite de la description, les termes « supérieur » et « inférieur » ou « haut » et « bas » sont définis par rapport à la direction verticale Z, les termes « intérieur » et « extérieur » et leurs dérivés sont définis par rapport à la direction latérale Y, et les termes « avant » et « arrière » ou « amont » et « aval » sont définis par rapport à la direction longitudinale X, l'expression « vers l'avant » étant équivalente à « vers l'aval » et l'expression « vers l'amont » étant équivalente à « vers l'arrière ».

Dans l'exemple décrit ici, l'ensemble 1 est un couloir de contention permettant de contenir des animaux tels que du bétail et de les pousser dans une direction souhaitée, et la structure agricole mobile est une barrière de poussée 20. Toutefois, le système de verrouillage décrit plus bas ne se limite pas à cette application, et peut également être utilisé sur d'autres dispositifs.

L'ensemble 1 comprend deux parois latérales 3 parallèles l'une avec l'autre, s'étendant dans la direction longitudinale X, et formant entre elles le couloir de contention. Au sommet de chaque paroi latérale 3 est disposé un rail 2 s'étendant dans la direction longitudinale X le long de la paroi latérale 3. On comprend donc que les rails 2 sont disposés en hauteur, par exemple à 2 mètres de hauteur environ, de manière à surplomber les parois latérales 3. Chaque rail 2 comprend, sur sa face supérieure, une pluralité d'orifices 22 répartis à intervalles réguliers le long du rail 2 dans la direction longitudinale X.

Les rails 2 et les parois latérales 3 constituent les parties fixes de l'ensemble 1, les parois latérales 3 étant par ailleurs fixées au sol. L'ensemble 1 comprend en outre un portique 10, mobile en translation le long des rails 2 dans la direction longitudinale X. Le portique 10 porte la barrière 20 se déplaçant également dans la direction longitudinale X conjointement au portique 10, et permettant, lorsqu'elle est fermée, de pousser le bétail dans une direction souhaitée, par exemple vers l'avant, sous l'action d'un utilisateur, notamment d'un éleveur, situé de l'autre côté de la barrière 20 et poussant manuellement sur celle-ci.

Typiquement, le portique 10 comprend une pluralité de montants horizontaux longitudinaux 11, 12, 13, deux montants horizontaux transversaux 14, et deux montants verticaux 15. Plus précisément, un premier montant longitudinal 11, s'étendant dans la direction longitudinale X, est disposé à chaque extrémité extérieure du portique 10 dans la direction transversale Y. Chaque premier montant longitudinal 11 est configuré pour coopérer avec un rail 2 par un contact coulissant, par exemple via un rouleau (non représenté) porté par le premier montant longitudinal 11 et roulant le long d'une face latérale intérieure du rail 2.

Un deuxième montant longitudinal 12 est disposé parallèlement à chaque un premier montant longitudinal 11, vers l'intérieur par rapport à celui-ci, et s'étendant parallèlement à celui-ci. Un troisième montant longitudinal 13 peut également être disposé entre les deux deuxièmes montants longitudinaux 12, sensiblement au centre du portique 10 dans la direction transversale Y, afin d'améliorer davantage la tenue mécanique du portique 10. Typiquement, des barres de renforts 16 peuvent être fixées entre le troisième montant longitudinal 13 et les montants verticaux 15. Toutefois, ces éléments structuraux du portique 10 et de l'ensemble 1 n'étant pas l'objet de l'invention, ils ne seront pas détaillés davantage.

On notera toutefois que les montants transversaux 14 s'étendent chacun dans la direction transversale Y entre les deux premiers montants longitudinaux 11, parallèlement entre eux, et permettent de maintenir les montants longitudinaux 11, 12, 13.

En outre, les montants verticaux 15 s'étendent chacun verticalement dans la direction verticale Z, depuis un premier montant longitudinal 11 vers le sol, mais sans toucher ce dernier, afin de permettre le déplacement du portique 10. La barrière 20 s'étend entre les deux montants verticaux 15, une extrémité latérale de ladite barrière 20 étant fixée de manière mobile par rapport à l'un des deux montants verticaux 15, afin de pouvoir pivoter par rapport à celui-ci pour passer d'une position fermée à une position ouverte, et inversement. L'extrémité latérale opposée de la barrière 20 est fixée de manière amovible à l'autre des deux montants verticaux 15 dans la position fermée, illustrée sur la figure 1 et la figure 2.

Ainsi, l'ensemble des éléments du portique 10 comprenant les montants 11, 12, 13, 14, 15, et la barrière 20, peuvent se déplacer conjointement le long des rails 2 dans la direction longitudinale X, dans un premier sens S1 de déplacement ou dans un deuxième sens S2 de déplacement. Par convention, on considère dans la suite de la description que le premier sens S1 de déplacement est un sens de déplacement « vers l'avant », et que le deuxième sens S2 de déplacement est un sens de déplacement « vers l'arrière ».

L'ensemble 1 comprend également au moins un système de verrouillage 100, dans cet exemple deux systèmes de verrouillage 100 disposés chacun aux deux extrémités latérales du portique 10. Les systèmes de verrouillage 100 sont fixés au portique 10 et se déplacent donc conjointement à celui-ci lors d'un déplacement vers l'avant ou vers l'arrière.

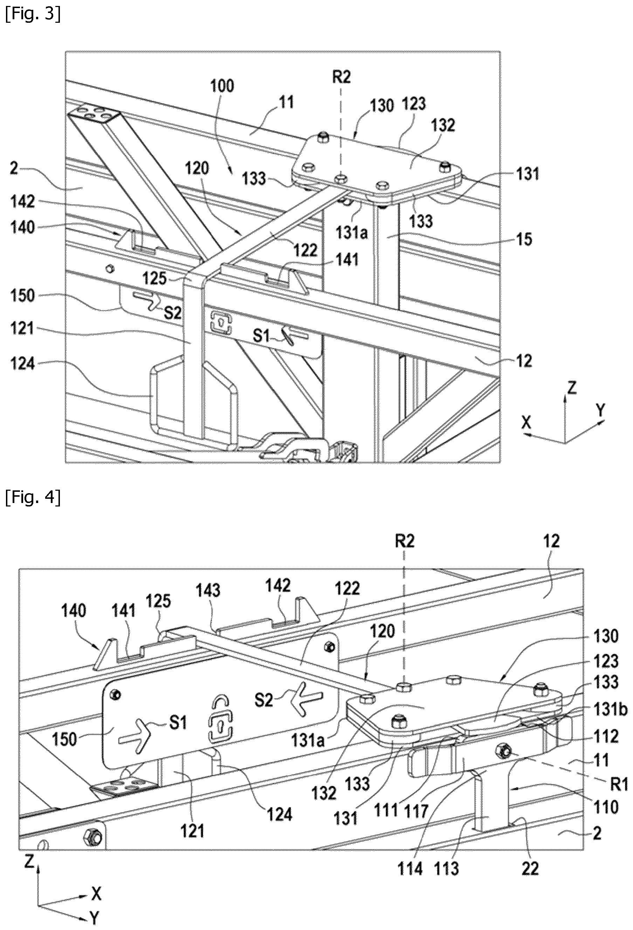

Les figures 3 et 4 représentent en perspective des vues détaillées d'un des systèmes de verrouillage 100, sous des angles différents. Sur la figure 3, le système de verrouillage 100 est observé depuis l'intérieur de l'ensemble 1, c'est-à-dire depuis l'intérieur du couloir de contention, vers l'extérieur, et sur la figure 4, le système de verrouillage 100 est observé depuis l'extérieur de l'ensemble 1, vers l'intérieur.

Chaque système de verrouillage 100 comprend un cliquet 110 fixé au premier montant longitudinal 11, sur une face latérale extérieure de celui-ci, et de manière mobile par rapport à celui-ci. Plus précisément, le cliquet 110 est mobile en rotation par rapport au premier montant longitudinal 11, et peut pivoter autour d'un premier axe de rotation R1, qui est de préférence perpendiculaire à la direction longitudinale X et parallèle à la direction transversale Y.

Un étrier 117 peut être fixé au premier montant longitudinal 11 de manière à maintenir le cliquet 110 en position, le cliquet 110 étant alors disposé entre le premier montant longitudinal 11 et l'étrier 117, ce qui permet de limiter un déplacement du cliquet 110 dans la direction transversale Y.

Le cliquet comprend une portion amincie 113, et une portion élargie 114 qui est plus large que la portion amincie 113, la largeur étant définie dans la direction longitudinale X. La portion amincie 113 est dimensionnée de manière à pouvoir pénétrer dans les orifices 22 du rail 2, lorsque le cliquet 110 se trouve en vis-à-vis d'un des orifices 22 au cours du déplacement du portique 10, correspondant à la configuration représentée sur la figure 4.

La portion élargie 114 constitue la partie supérieure du cliquet 110, et définie deux saillies longitudinales du cliquet 110, notamment un premier rebord 111 longitudinal et un deuxième rebord 112 longitudinal. Dans cet exemple, le premier rebord 111 est une portion du cliquet 110 faisant saillie vers l'arrière dans la direction longitudinale, et le deuxième rebord 112 est une portion du cliquet 110 faisant saillie dans la direction opposée, vers l'avant dans la direction longitudinale.

Le système de verrouillage 100 comprend en outre un levier d'actionnement 120, fixé au portique 10 de manière mobile. Le levier d'actionnement 120 comprend une portion verticale 121 s'étendant dans la direction verticale Z, et une portion horizontale 122 s'étendant sensiblement selon la direction transversale Y, mais pouvant présenter un angle positif ou négatif par rapport à celle-ci selon la position du levier 120.

La portion verticale 121 et la portion horizontale 122 sont sensiblement perpendiculaires l'une à l'autre, et sont liées entre elles via une liaison coudée 125. La portion verticale 121 comprend en outre, à une extrémité inférieure, une poignée 124 de préhension, permettant à un éleveur d'actionner le levier 120 de la manière décrite ci-après. La portion verticale 121 s'étend ainsi de la poignée 124 vers le haut jusqu'à la liaison coudée 125.

La portion verticale 121 est donc dirigée vers le bas, ce qui permet à un éleveur d'actionner le levier d'actionnement 120 via la poignée 124, et d'agir ainsi sur le système de verrouillage 100 qui serait sinon difficilement accessible car placé en hauteur.

La portion horizontale 122 s'étend depuis sa liaison coudée 125 vers l'extérieur jusqu'à une extrémité extérieure 123 qui est apte à coopérer avec la portion élargie 114 du cliquet 110. La portion horizontale 122 est fixée au premier montant longitudinal 11 par l'intermédiaire d'un support fixe 130. Plus précisément, la portion horizontale 122 est fixée de manière mobile au support fixe 130, lui-même fixé de manière immobile au premier montant longitudinal 11.

Le support fixe 130 comprend une base 131 fixée, par exemple par soudage ou vissage, au premier montant longitudinal 11. La base 131 présente la forme d'une plaque s'étendant depuis son ou ses points de fixation au premier montant longitudinal 11 à un bord extérieur 131b, vers l'intérieur de l'ensemble 1 jusqu'à un bord intérieur 131a pouvant être en porte-à-faux par rapport au premier montant longitudinal 11.

La portion horizontale 122 est fixée à la base 131 via une liaison pivot située de préférence à proximité du bord intérieur 131a en porte-à-faux de la base 131. Cela permet d'augmenter l'amplitude angulaire de l'extrémité 123 lors de l'actionnement du levier 120. De même, le support fixe 130, en particulier la base 131 est de préférence évasée depuis l'intérieur vers l'extérieur, de manière à permettre une telle amplitude angulaire. En d'autres termes, le bord intérieur 131a de la base 131 est plus étroit (dans la direction longitudinale X) que le bord extérieur 131b fixé au premier montant 11.

La portion horizontale 122 peut ainsi pivoter par rapport à la base 131 et donc au support fixe 130, autour d'un deuxième axe de rotation R2 qui est adjacent audit bord intérieur 131a, l'extrémité extérieure 123 de la portion horizontale 122 se déplaçant alors sensiblement le long du bord extérieur 131b lors de la rotation de la portion horizontale 122. Le deuxième axe de rotation R2 est de préférence parallèle à la direction verticale Z et perpendiculaire au plan XY. En d'autres termes, le deuxième axe de rotation R2 est sensiblement perpendiculaire au premier axe de rotation R1.

Cet agencement, notamment le fait que les axes R1 et R2 soient perpendiculaires entre eux, permet à un éleveur d'agir aisément sur le système de verrouillage 100, par l'intermédiaire du levier d'actionnement 120, bien que le système et en particulier le cliquet 110 soit situé en hauteur et soit difficilement accessible directement par l'éleveur.

Le support fixe 130 comprend en outre une plaque de maintien 132, typiquement une plaque de forme équivalente à la base 131, et étant fixée sur ladite base 131 au-dessus de celle-ci, par l'intermédiaire d'entretoises 133. Les entretoises 133 sont disposées entre la base 131 et la plaque de maintien 132 de manière à laisser un espace suffisant entre ces dernières, pour permettre le passage et le déplacement de la portion horizontale 122, et notamment de l'extrémité extérieure 123.

La plaque de maintien 132 permet d'améliorer la tenue de la portion horizontale 122 dont l'extrémité 123 est confinée entre la base 131 et la plaque de maintien 132. Elle permet en particulier de limiter les mouvements ascendants de l'extrémité 123 pouvant être dus aux déformations élastiques de la portion horizontale 122, et donc d'améliorer le blocage de la rotation du cliquet 110 dans l'un ou l'autre des sens de rotation du cliquet 110, en fonction de la position du levier 120, comme cela sera décrit plus en détails ci-après. La plaque de maintien 132 permet donc d'améliorer l'efficacité du système de verrouillage 100.

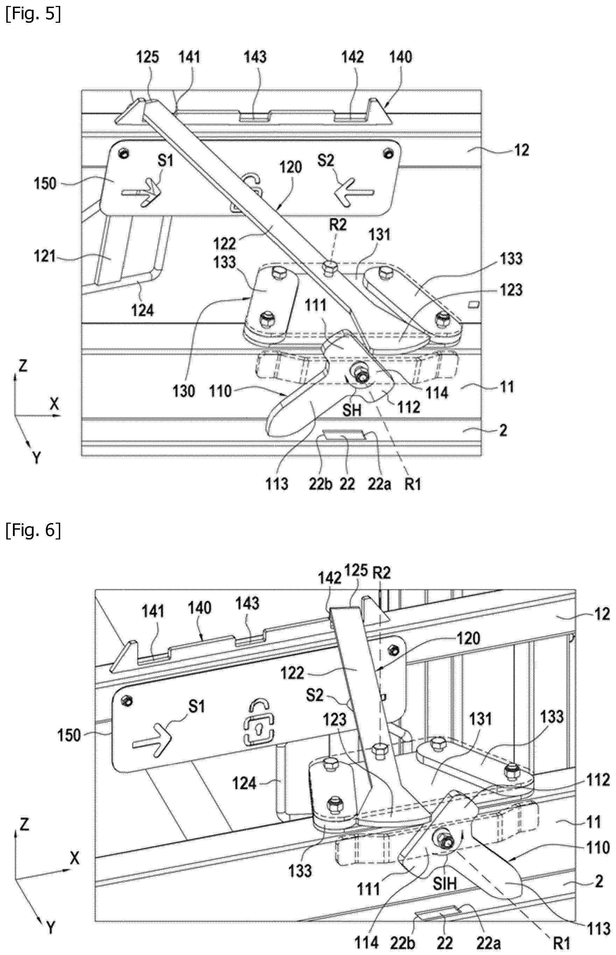

Par ailleurs, le levier d'actionnement 120 est apte à être disposé dans différentes positions, dans cet exemple trois positions distinctes, en passant de l'une à l'autre des positions par rotation autour du deuxième axe de rotation R2. Plus précisément, le levier d'actionnement 120 peut être disposé dans une première position, une deuxième position et une troisième position représentées respectivement sur les figures 5, 6 et 7. On notera que sur ces figures, la plaque de maintien 132 et l'étrier 117 sont représentés en transparence afin de mieux visualiser la position et le mouvement des pièces mobiles, notamment de l'extrémité 123 du levier 120 et du cliquet 110.

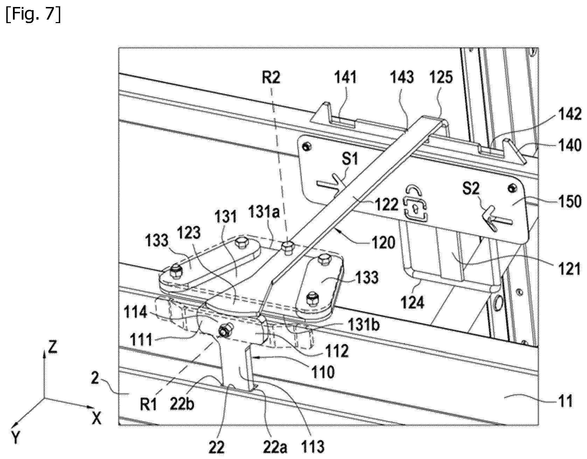

La première position du levier d'actionnement 120 (figure 5) permet un déplacement du portique 10 et de la barrière 20 le long des rails 2 dans la première direction S1 vers l'avant, et de bloquer ce déplacement dans la deuxième direction S2 vers l'arrière. En outre, la deuxième position du levier d'actionnement 120 (figure 6) permet un déplacement du portique 10 et de la barrière 20 le long des rails 2 dans la deuxième direction S2 vers l'arrière, et de bloquer ce déplacement dans la première direction S1 vers l'avant. Enfin, la troisième position du levier d'actionnement 120 (figure 7) permet de bloquer un déplacement du portique 10 et de la barrière 20 le long des rails 2 à la fois dans la première direction S1 vers l'avant et dans la deuxième direction S2 vers l'arrière.

Pour ce faire, le deuxième montant longitudinal 12 porte de préférence un dispositif de calage 140 permettant de maintenir le levier 120 dans l'une ou l'autre de ses positions. Plus précisément, le dispositif de calage 140 peut être une règle métallique comprenant des encoches, typiquement trois encoches, formant respectivement un premier logement 141 constituant un premier moyen de calage, un deuxième logement 142 constituant un deuxième moyen de calage, et un troisième logement 143 constituant un troisième moyen de calage, chacun apte à recevoir la portion horizontale 122 du levier d'actionnement 120.

Lorsque le levier d'actionnement 120 est dans sa première position, la portion horizontale 122 est disposée dans le premier logement 141. Lorsque le levier d'actionnement 120 est dans sa deuxième position, la portion horizontale 122 est disposée dans le deuxième logement 142. Lorsque le levier d'actionnement 120 est dans sa troisième position, la portion horizontale 122 est disposée dans le troisième logement 143.

Les logements 141, 142, 143 permettent de maintenir le levier 120 dans sa première, sa deuxième ou sa troisième position respectivement, en limitant, voir en empêchant un mouvement rotatif de la portion horizontale 122 autour du deuxième axe de rotation R2, notamment au cours d'un déplacement du portique 10.

Ainsi, au cours d'un déplacement du portique 10, la portion horizontale 122 est à la fois maintenue par la plaque de maintien 132 à son extrémité extérieur 123, limitant un mouvement ascendant de celle-ci, et par les logements 141, 142, 143 à son extrémité opposée adjacente à la portion coudée 125, limitant sa rotation autour du deuxième axe de rotation R2. Cela permet d'améliorer encore le maintien de la portion horizontale 122 et donc le blocage du cliquet 110, et par conséquent l'efficacité du système de verrouillage 100.

On notera qu'une largeur des logements 141, 142, 143, dans la direction longitudinale X, est sensiblement égale mais légèrement supérieure à la largeur de la portion horizontale 122, de manière à permettre un positionnement de celle-ci dans lesdits logements, tout en limitant la possibilité d'une rotation de la portion horizontale 122 autour du deuxième axe de rotation R2 lorsque ladite portion horizontale 122 est disposée dans un des logement 141, 142, 143.

La position du levier d'actionnement peut être repérée par des indicateurs formés sur un panneau 150. Ces indicateurs sont des portions usinées du panneau 150, représentant des flèches orientées dans la direction de déplacement autorisée par la position donnée du levier 120.

Plus précisément, une flèche orientée dans la première direction S1, c'est-à-dire vers l'avant, est formée à la verticale du premier logement 141, indiquant que lorsque le levier 120 est dans la première position, le portique 10 peut se déplacer vers l'avant dans la première direction S1, mais pas dans la deuxième direction S2.

De même, une flèche orientée dans la deuxième direction S2, c'est-à-dire vers l'arrière, est formée à la verticale du deuxième logement 142, indiquant que lorsque le levier 120 est dans la deuxième position, le portique 10 peut se déplacer vers l'arrière dans la deuxième direction S2, mais pas dans la première direction S1.

Par ailleurs, une géométrie représentant un cadenas fermé est formée à la verticale du troisième logement 143, indiquant que lorsque le levier 120 est dans la troisième position, le portique 10 ne peut se déplacer ni vers l'avant dans la première direction S1, ni vers l'arrière dans la deuxième direction S2, le système de verrouillage 100 étant donc verrouillé dans les deux sens de déplacement.

Ainsi, lorsque le levier d'actionnement 120 est dans sa première position (figure 5), l'extrémité intérieure de la portion horizontale 122, adjacente à la portion coudée 125, est disposée dans le premier logement 141, et l'extrémité extérieure 123 de la portion horizontale 122 est décalée vers l'avant, de manière à se trouver verticalement au-dessus du deuxième rebord 112 longitudinal du cliquet 110, le premier rebord 111 longitudinal n'étant à l'inverse pas recouvert par l'extrémité extérieure 123.

Par conséquent, lors d'un mouvement de rotation du cliquet 110 dans un premier sens de rotation, ici dans le sens horaire SH, le premier rebord 111 de la portion élargie 114 est libre de basculer vers l'avant sans que le cliquet 110 ne se retrouve bloqué. A l'inverse, lors d'un mouvement de rotation du cliquet 110 dans un deuxième sens de rotation, ici dans le sens horaire SIH (pour « Sens Inverse Horaire »), le deuxième rebord 112 de la portion élargie 114 entre en contact avec l'extrémité 123 du levier 120 et se trouve donc bloqué par ladite extrémité 123 lors de son mouvement de bascule vers l'arrière, ce qui bloque ainsi le cliquet 110 dans son mouvement de rotation dans le sens antihoraire SIH.

De même, lorsque le levier d'actionnement 120 est dans sa deuxième position (figure 6), l'extrémité intérieure de la portion horizontale 122, adjacente à la portion coudée 125, est disposée dans le deuxième logement 142, et l'extrémité extérieure 123 de la portion horizontale 122 est décalée vers l'arrière, de manière à se trouver verticalement au-dessus du premier rebord 111 longitudinal du cliquet 110, le deuxième rebord 112 longitudinal n'étant à l'inverse pas recouvert par l'extrémité extérieure 123.

Par conséquent, lors d'un mouvement de rotation du cliquet 110 dans le deuxième sens de rotation, c'est à dire le sens antihoraire SIH, le deuxième rebord 112 de la portion élargie 114 est libre de basculer vers l'arrière sans que le cliquet 110 ne se retrouve bloqué. A l'inverse, lors d'un mouvement de rotation du cliquet 110 dans le sens horaire SH, le premier rebord 111 de la portion élargie 114 entre en contact avec l'extrémité 123 du levier 120 et se trouve donc bloqué par ladite extrémité 123 lors de son mouvement de bascule vers l'avant, ce qui bloque ainsi le cliquet 110 dans son mouvement de rotation dans le sens horaire SH.

Enfin, lorsque le levier d'actionnement 120 est dans sa troisième position (figure 7), l'extrémité intérieure de la portion horizontale 122, adjacente à la portion coudée 125, est disposée dans le troisième logement 143, et l'extrémité extérieure 123 de la portion horizontale 122 est centrée par rapport au support fixe 130, de manière à se trouver à la fois verticalement au-dessus, au moins en partie, du premier rebord 111 et du le deuxième rebord 112 longitudinal.

Par conséquent, lors d'un mouvement de rotation du cliquet 110 dans l'un ou l'autre des sens de rotation, c'est à dire les sens horaire SH et antihoraire SIH, le premier rebord 111 et le deuxième rebord 112 de la portion élargie 114 entrent en contact avec l'extrémité 123 du levier 120 et se trouvent donc bloqués par ladite extrémité 123 lors de leur mouvement de bascule vers l'avant ou vers l'arrière, ce qui bloque ainsi le cliquet 110 dans son mouvement de rotation dans les deux sens de rotation, horaire SH et antihoraire SIH.

On notera à cet égard que, de préférence, l'extrémité 123 de la portion horizontale 122 est évasée vers l'extérieure, de manière à recouvrir une surface plus grande de la portion élargie 114 du cliquet 110. L'extrémité 123 peut notamment avoir une amplitude axiale, dans la direction longitudinale X, sensiblement égale à la largeur de la portion élargie 114 dans cette même direction. Cela permet d'améliorer le blocage du cliquet 110, dont la portion amincie 113 est insérée dans un orifice 22 du rail 2, et donc d'améliorer l'efficacité du système de verrouillage 100 dans les deux sens de déplacement S1, S2.

Un procédé de verrouillage d'une barrière agricole 20, utilisant un système de verrouillage 100 décrit ci-dessus, va ensuite être décrit dans la suite de la description.

On considère une situation initiale dans laquelle le levier d'actionnement 120 est dans sa première position (figure 5). Dans cette configuration, le portique 10, et donc la barrière 20, se déplace vers l'avant le long des rails 2 dans la première direction S1. Au cours de ce déplacement, une extrémité de la portion amincie 113 du cliquet 110 glisse le long du rail 2, le cliquet 110 étant alors basculé vers l'avant dans le sens horaire SH.

Lorsque, au cours du déplacement dans la première direction S1, le cliquet 110 se retrouve verticalement au droit d'un orifice 22 du rail 2, la portion amincie 113 tombe dans l'orifice 22 en pénétrant dans ce dernier. A ce stade, le portique 10 peut néanmoins poursuivre son déplacement dans la première direction S1. En effet, le rebord avant 22a de l'orifice 22, formant butée pour la portion amincie 113, va entrainer par effet levier la bascule du cliquet 110 vers l'avant par rotation autour du premier axe de rotation R1 dans le sens horaire SH. Une telle bascule est possible par le fait que le premier rebord 111 de la portion élargie 114 du cliquet 110 n'est pas bloqué par l'extrémité 123 du levier 120 dans sa première position, comme décrit précédemment. La portion amincie 113 peut alors sortir de l'orifice 22 et le portique 10 peut ainsi poursuivre de la même manière son déplacement dans la première direction S1 jusqu'au prochain orifice 22, et ainsi de suite.

En revanche, à partir de la position dans laquelle la portion amincie 113 est insérée dans l'orifice 22, le portique 10 ne peut pas entamer un déplacement dans la deuxième direction S2. En effet, le rebord arrière 22b de l'orifice 22, formant butée pour la portion amincie 113, va tendre à faire basculer par effet levier le cliquet 110 vers l'arrière par rotation autour du premier axe de rotation R1 dans le sens antihoraire SIH. Toutefois, une telle bascule est entravée par le fait le deuxième rebord 112 de la portion élargie 114 du cliquet 110 est bloqué par l'extrémité 123 du levier 120 dans sa première position, comme décrit précédemment.

Plus précisément, au cours de la rotation du cliquet 110 dans le sens antihoraire SIH, le deuxième rebord 112 de la portion élargie 114 du cliquet 110 vient en contact et en butée contre l'extrémité 123 du levier qui se trouve au-dessus, empêchant le cliquet 110 de poursuivre son mouvement de rotation dans le sens SIH.

On notera qu'en l'absence de la plaque de maintien 132 décrite précédemment, un effort suffisamment important exercé sur le portique 10 dans la deuxième direction S2, de manière à forcer la rotation du cliquet 110 dans le sens SIH, pourrait entrainer un déplacement ascendant de l'extrémité 123 de la portion horizontale 122 du levier 120 par déformation élastique. On comprend donc que la plaque de maintien 132 permet de limiter ce risque.

La portion amincie 113 étant bloquée par le rebord arrière 22b de l'orifice 22, et le deuxième rebord 112 étant bloqué par l'extrémité 123, empêchant la rotation du cliquet 110 dans le sens antihoraire SIH, il est difficile voire possible d'extraire la portion amincie 113 de l'orifice 22 en tirant la barrière 20 vers l'arrière, ce qui empêche ainsi une translation du portique 10 dans le deuxième sens S2.

On notera néanmoins que lorsque le cliquet 110 n'est pas inséré dans un orifice 22, comme représenté sur la figure 5, un déplacement du portique 10 et de la barrière 20 dans le deuxième sens S2 reste possible jusqu'à ce que le cliquet 110 se trouve verticalement au-dessus de l'orifice 22 suivant. Dans ce cas, la portion amincie 113 tombe dans ledit orifice 22, ce qui entraine le verrouillage de la barrière 20 dans le deuxième sens S2, par le mécanisme décrit ci-dessus. Il est donc préférable de prévoir un nombre et une densité d'orifices 22 élevés le long des rails 2, par exemple tous les 30 cm maximum, de préférence tous les 20cm maximum, de manière à limiter la course de la barrière 20.

Par ailleurs, à partir de la position dans laquelle la portion amincie 113 est insérée dans l'orifice 22, il est possible de modifier la position du levier d'actionnement 120, en le passant de la première position (figure 5) à la deuxième position (figure 6).

Pour ce faire, l'actionnement du levier 120 comprend le fait de pousser la portion verticale 121 du levier d'actionnement 120 vers le haut, par l'intermédiaire de la poignée 124, de manière à extraire la portion horizontale 122 du premier logement 141 par déformation élastique, puis de pousser le levier d'actionnement 120 vers l'avant dans la direction longitudinale X de manière à faire pivoter la portion horizontale 122 autour du deuxième axe de rotation R2, jusqu'à positionner la portion horizontale 122 en face du deuxième logement 142, et enfin de relâcher le levier 120 de manière à positionner la portion horizontale 122 dans ledit deuxième logement 142.

On comprend que dans l'exemple illustré sur les figures 1 et 2, dans lequel l'ensemble 1 comprend deux système de verrouillage 100 de part et d'autre, latéralement, de l'ensemble 1, l'éleveur doit effectuer cette action sur les deux leviers d'actionnement 120.

Par cette action, l'extrémité extérieure 123 de la portion horizontale 122 pivote vers l'arrière de manière à se positionner au-dessus du premier rebord 111 du cliquet 110, et à libérer ainsi le deuxième rebord 112, rendant possible un déplacement du portique 10 vers l'arrière dans le deuxième sens S2, et empêchant un déplacement du portique 10 vers l'avant dans le premier sens S1.

En effet, le rebord arrière 22b de l'orifice 22, formant butée pour la portion amincie 113, va entrainer par effet levier la bascule du cliquet 110 vers l'arrière par rotation autour du premier axe de rotation R1 dans le sens antihoraire SIH. Une telle bascule est possible par le fait que le deuxième rebord 112 de la portion élargie 114 du cliquet 110 n'est pas bloqué par l'extrémité 123 du levier 120 dans sa deuxième position, comme décrit précédemment. La portion amincie 113 peut alors sortir de l'orifice 22 et le portique 10 peut ainsi poursuivre son déplacement dans la deuxième direction S2 jusqu'au prochain orifice 22, et ainsi de suite.

En revanche, à partir de la position dans laquelle la portion amincie 113 est insérée dans l'orifice 22, le portique 10 ne peut pas entamer un déplacement dans la première direction S1. En effet, le rebord avant 22a de l'orifice 22, formant butée pour la portion amincie 113, va tendre à faire basculer par effet levier le cliquet 110 vers l'avant par rotation autour du premier axe de rotation R1 dans le sens horaire SH. Toutefois, une telle bascule est entravée par le fait que le premier rebord 111 de la portion élargie 114 du cliquet 110 est bloqué par l'extrémité 123 du levier 120 dans sa deuxième position, comme décrit précédemment.

Plus précisément, au cours de la rotation du cliquet 110 dans le sens horaire SH, le premier rebord 111 de la portion élargie 114 du cliquet 110 vient en contact et en butée contre l'extrémité 123 du levier qui se trouve au-dessus, empêchant le cliquet 110 de poursuivre son mouvement de rotation dans le sens SH.

La portion amincie 113 étant bloquée par le rebord avant 22a de l'orifice 22, et le premier rebord 111 étant bloqué par l'extrémité 123, empêchant la rotation du cliquet 110 dans le sens horaire SH, il est difficile voire possible d'extraire la portion amincie 113 de l'orifice 22 en poussant la barrière 20 vers l'avant, ce qui empêche ainsi une translation du portique 10 dans le premier sens S1.

On notera néanmoins comme précédemment que lorsque le cliquet 110 n'est pas inséré dans un orifice 22, comme représenté sur la figure 6, un déplacement du portique 10 et de la barrière 20 dans le premier sens S1 reste possible jusqu'à ce que le cliquet 110 se trouve verticalement au-dessus de l'orifice 22 suivant. Dans ce cas, la portion amincie 113 tombe dans ledit orifice 22, ce qui entraine le verrouillage de la barrière 20 dans le premier sens S1, par le mécanisme décrit ci-dessus.

Enfin, à partir de la position dans laquelle la portion amincie 113 est insérée dans l'orifice 22, il est possible de modifier la position du levier d'actionnement 120, en le passant de la première position (figure 5) ou de la deuxième position (figure 6), à la troisième position (figure 7). On notera que la troisième position est également celle représentée sur les figures 3 et 4.

Pour ce faire, de la manière décrite précédemment, le levier 120 est actionné en poussant la portion verticale 121 vers le haut par l'intermédiaire de la poignée 124, de manière à extraire la portion horizontale 122 du premier ou du deuxième logement 141, 142 par déformation élastique, puis en poussant ou tirant le levier d'actionnement 120 de manière à faire pivoter la portion horizontale 122 autour du deuxième axe de rotation R2, jusqu'à positionner la portion horizontale 122 en face du troisième logement 143, et enfin en relâchant le levier 120 de manière à positionner la portion horizontale 122 dans ledit troisième logement 143.

Par cette action, l'extrémité extérieure 123 de la portion horizontale 122 pivote de manière à se positionner de manière centrée par rapport au support fixe 130, au-dessus à la fois du premier rebord 111 et du deuxième rebord 112 du cliquet 110, empêchant ainsi un déplacement du portique 10 à la fois vers l'avant dans le premier sens S1, et vers l'arrière dans le deuxième sens S2, par les mécanismes de blocage décrit plus haut.

Par le système de verrouillage 100 et le procédé qui en découle, décrits ci-dessus, il est possible de sélectionner de manière simple le sens de verrouillage de la barrière 20, par une unique action sur le levier d'actionnement 120, permettant un verrouillage et une utilisation en continu.

En effet, lorsque le levier 120 est dans sa première position, l'éleveur peut déplacer la barrière 20 vers l'avant en la poussant dans le premier sens S1, sans se soucier de verrouiller la barrière 20 par palier pour éviter un déplacement non souhaitée de celle-ci dans le sens opposé S2, un tel verrouillage dans le sens S2 étant automatique à chaque palier, c'est-à-dire à chaque orifice 22. Il n'est en outre pas nécessaire de déverrouiller le cliquet 110 à chaque palier pour pouvoir continuer à déplacer la barrière 20 dans le sens S1 (comme cela serait le cas par exemple avec un système de ressort de rappel poussant un taquet dans chaque orifice 22 au cours du déplacement), ce qui permet un déplacement en continu.

De même, une simple action sur le levier 120 permet d'inverser le sens de verrouillage de la barrière 20. En effet, lorsque le levier 120 est dans sa deuxième position, l'éleveur peut déplacer la barrière 20 vers l'arrière en la tirant dans le deuxième sens S2, sans se soucier de verrouiller la barrière 20 par palier pour éviter un déplacement non souhaitée de celle-ci dans le sens opposé S1, un tel verrouillage par palier étant automatique à chaque orifice 22.

L'éleveur peut donc pousser la barrière 22 vers l'avant, ou la tirer vers l'arrière en toute sécurité, tout en ayant ses deux mains libres pour pouvoir à la fois pousser (ou tirer) la barrière 120 et agir sur les animaux présents de l'autre côté de la barrière 20. Le système de verrouillage 100 permet ainsi d'améliorer la sécurité de l'éleveur, tout en permettant une utilisation pratique et efficace.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Système de verrouillage (100) pour structure agricole mobile (20) apte à se déplacer dans une direction longitudinale (X) le long d'au moins un rail (2), le système de verrouillage (100) étant configuré pour être solidaire en déplacement avec la structure agricole mobile (20), **caractérisé par**:
au moins un cliquet (110) apte à coopérer avec des orifices (22) répartis le long du rail (2), le cliquet (110) comprenant un premier rebord (111) longitudinal et un deuxième rebord (112) longitudinal, et étant configuré pour pivoter autour d'un premier axe de rotation (R1), le système de verrouillage (100) comprenant un levier d'actionnement (120) mobile entre une première position dans laquelle il est apte à limiter une rotation du cliquet (110) dans un sens antihoraire (SIH) par contact du deuxième rebord (112) contre le levier d'actionnement (120) lors de la rotation dans le sens antihoraire (SIH), et une deuxième position dans laquelle il est apte à limiter une rotation du cliquet (110) dans un sens horaire (SH) par contact du premier rebord (111) contre le levier d'actionnement (120) lors de la rotation dans le sens horaire (SH).

2. Système de verrouillage (100) selon la revendication 1, dans lequel le levier d'actionnement (120) est fixé de manière mobile à un support fixe (130) du système de verrouillage et est apte à passer de sa première position à sa deuxième position en pivotant par rapport au support fixe (130), autour d'un deuxième axe de rotation (R2) transversal au premier axe de rotation (R1) du cliquet (110).

3. Système de verrouillage (100) selon la revendication 2, comprenant un premier moyen de calage (141) apte à recevoir une portion du levier d'actionnement (120) lorsque ce dernier est dans sa première position, et un deuxième moyen de calage (142) apte à recevoir la portion du levier d'actionnement (120) lorsque ce dernier est dans sa deuxième position, le premier et le deuxième moyen de calage (141, 142) étant aptes à limiter une rotation du levier d'actionnement (120) autour du deuxième axe de rotation (R2).

4. Système de verrouillage (100) selon la revendication 2 ou 3, dans lequel le support fixe (130) comprend une plaque de maintien (132) fixée à une base (131) du support fixe (130), une portion du levier d'actionnement (120) étant logée dans un espace formé entre la plaque de maintien (132) et la base (131) du support fixe (130), la plaque de maintien (132) étant apte à limiter un mouvement ascendant de la portion du levier d'actionnement (120).

5. Système de verrouillage (100) selon l'une quelconque des revendications 1 à 4, dans lequel le levier d'actionnement (120) est apte à être positionné dans une troisième position dans laquelle il est apte à limiter une rotation du cliquet (110) à la fois dans le sens horaire (SH) et dans le sens anti horaire (SIH).

6. Système de verrouillage (100) selon l'une quelconque des revendications 1 à 5, dans lequel le cliquet (110) comprend une portion amincie (113) apte à pénétrer au moins en partie dans les orifices (22) du rail (2), et une portion élargie (114) apte à coopérer avec une extrémité (123) du levier d'actionnement (120) et comprenant le premier rebord (111) longitudinal et le deuxième rebord (112) longitudinal.

7. Système de verrouillage (100) selon l'une quelconque des revendications 1 à 6, dans lequel le levier d'actionnement (120) comprend une portion verticale (121) comprenant une poignée d'actionnement (124), et une portion horizontale (122) dont une extrémité (123) est apte à coopérer avec le cliquet (110).

8. Système de verrouillage (100) selon la revendication 7, dans lequel l'extrémité (123) de la portion horizontale (122) du levier d'actionnement (120) est une extrémité évasée, une largeur de l'extrémité évasée (123) étant plus importante que le reste de ladite portion horizontale (122).

9. Ensemble (1) comprenant deux rails (2) parallèles entre eux, une structure agricole mobile (20), un portique (10) portant la structure agricole mobile (20) et étant mobile en translation le long des rails (2) dans une direction longitudinale (X), et au moins un système de verrouillage (100) selon l'une quelconque des revendications précédentes, le cliquet (110) étant fixé de manière mobile en rotation par rapport audit portique (10).

10. Ensemble (1) selon la revendication 9, dans lequel le portique (10) comprend un premier montant longitudinal (11) coopérant avec l'un des deux rails (2) en étant apte à translater par rapport audit rail (2), le levier d'actionnement (120) étant fixé de manière mobile à un support fixe (130), le support fixe (130) et le cliquet (110) étant fixés audit premier montant horizontal (11).

11. Ensemble (1) selon la revendication 10, dans lequel le portique (10) comprend un deuxième montant longitudinal (12) parallèle au premier montant longitudinal (11) et comprenant un premier, un deuxième et un troisième moyen de calage (141, 142, 143) apte à recevoir une portion du levier d'actionnement (120) lorsque ce dernier est respectivement dans sa première, sa deuxième et sa troisième position.

12. Ensemble (1) selon l'une quelconque des revendications 9 à 11, dans lequel la structure agricole mobile (20) est une barrière de poussée de couloir de contention.

13. Procédé de verrouillage d'une structure agricole mobile (20) utilisant un système de verrouillage (100) selon l'une quelconque des revendications 1 à 8, le procédé comprenant le déplacement de la structure agricole mobile (20) dans une direction longitudinale (X) le long d'au moins un rail (2), et le verrouillage de la structure agricole mobile (20) en actionnant le levier d'actionnement (120) dans sa première position de manière à permettre un déplacement de la structure agricole mobile (20) le long du rail (2) dans un premier sens (S1) de déplacement et à bloquer son déplacement dans un deuxième sens (S2) de déplacement opposé au premier sens (S1), ou dans sa deuxième position de manière à permettre le déplacement de la structure agricole mobile (20) le long du rail (2) dans le deuxième sens (S2) de déplacement et à bloquer son déplacement dans le premier sens (S1).

14. Procédé selon la revendication 13, dans lequel l'actionnement du levier d'actionnement (120) comprend le fait de pousser une portion verticale (121) du levier d'actionnement (120) vers le haut dans une direction verticale (Z) perpendiculaire à la direction longitudinale (X) de manière à extraire une portion horizontale (122) du levier d'actionnement (120) de l'un d'un premier ou d'un deuxième moyen de calage (141, 142), puis de déplacer le levier d'actionnement (120) dans la direction longitudinale (X) vers l'autre du premier ou du deuxième moyen de calage (141, 142), puis à relâcher le levier d'actionnement (120) de manière à positionner la portion horizontale (122) du levier d'actionnement (120) dans ledit autre du premier ou du deuxième moyen de calage (141, 142).

## Patentansprüche

1. Verriegelungssystem (100) für eine bewegliche landwirtschaftliche Struktur (20), das dazu geeignet ist, in einer Längsrichtung (X) entlang mindestens einer Schiene (2) verschoben zu werden, wobei das Verriegelungssystem (100) dazu konfiguriert ist, mit der beweglichen landwirtschaftlichen Struktur (20) bewegungsfest zu sein,
**gekennzeichnet durch**:
mindestens eine Sperrklinke (110), die dazu geeignet ist, mit Öffnungen (22) zusammenzuwirken, die entlang der Schiene (2) verteilt sind, wobei die Sperrklinke (110) eine erste Längseinfassung (111) und eine zweite Längseinfassung (112) umfasst und dazu konfiguriert ist, um eine erste Rotationsachse (R1) herum zu schwenken, wobei das Verriegelungssystem (100) einen Betätigungshebel (120) umfasst, der zwischen einer ersten Position, in der er dazu geeignet ist, eine Drehung der Sperrklinke (110) im Gegenuhrzeigersinn (SIH) durch den Kontakt der zweiten Einfassung (112) mit dem Betätigungshebel (120) bei der Drehung im Uhrzeigersinn (SIH) einzuschränken, und einer zweiten Position, in der er dazu geeignet ist, eine Drehung der Sperrklinke (110) im Uhrzeigersinn (SH) durch den Kontakt der ersten Einfassung (111) mit dem Betätigungshebel (120) bei der Drehung im Uhrzeigersinn (SH) einzuschränken, beweglich ist

2. Verriegelungssystem (100) nach Anspruch 1, wobei der Betätigungshebel (120) an einem feststehenden Träger (130) des Verriegelungssystems beweglich befestigt ist und in der Lage ist, von seiner ersten Position in seine zweite Position überzugehen, indem er im Verhältnis zu dem feststehenden Träger (130) um eine zweite Rotationsachse (R2), die zu der ersten Rotationsachse (R1) der Sperrklinke (110) quergerichtet ist, herum schwenkt.

3. Verriegelungssystem (100) nach Anspruch 2, umfassend ein erstes Verkeilungsmittel (141), das dazu geeignet ist, einen Abschnitt des Betätigungshebels (120) aufzunehmen, wenn sich dieser in seiner ersten Position befindet, und ein zweites Verkeilungsmittel (142), das dazu geeignet ist, den Abschnitt des Betätigungshebels (120) aufzunehmen, wenn sich dieser in seiner zweiten Position befindet, wobei das erste und das zweite Verkeilungsmittel (141, 142) dazu geeignet sind, eine Drehung des Betätigungshebels (120) um die zweite Rotationsachse (R2) herum einzuschränken.

4. Verriegelungssystem (100) nach Anspruch 2 oder 3, wobei der feststehende Träger (130) eine Halteplatte (132) umfasst, die an einer Basis (131) des feststehenden Trägers (130) befestigt ist, wobei ein Abschnitt des Betätigungshebels (120) in einem Raum aufgenommen ist, der zwischen der Halteplatte (132) und der Basis (131) des feststehenden Trägers (130) gebildet ist, wobei die Halteplatte (132) dazu geeignet ist, eine Aufwärtsbewegung des Abschnitts des Betätigungshebels (120) einzuschränken.

5. Verriegelungssystem (100) nach einem der Ansprüche 1 bis 4, wobei der Betätigungshebel (120) dazu geeignet ist, in einer dritten Position positioniert zu sein, in der er dazu geeignet ist, eine Drehung der Sperrklinke (110) sowohl im Uhrzeigersinn (SH) als auch im Gegenuhrzeigersinn (SIH) einzuschränken.

6. Verriegelungssystem (100) nach einem der Ansprüche 1 bis 5, wobei die Sperrklinke (110) einen schmaleren Abschnitt (113), der dazu geeignet ist, mindestens teilweise in die Öffnungen (22) der Schiene (2) einzudringen, und einen erweiterten Abschnitt (114) umfasst, der dazu geeignet ist, mit einem Ende (123) des Betätigungshebels (120) zusammenzuwirken, und der die erste Längseinfassung (111) und die zweite Längseinfassung (112) umfasst.

7. Verriegelungssystem (100) nach einem der Ansprüche 1 bis 6, wobei der Betätigungshebel (120) einen senkrechten Abschnitt (121), der einen Betätigungsgriff (124) umfasst, und einen waagerechten Abschnitt (122), dessen eines Ende (123) in der Lage ist, mit der Sperrklinke (110) zusammenzuwirken, umfasst.

8. Verriegelungssystem (100) nach Anspruch 7, wobei das Ende (123) des waagerechten Abschnitts (122) des Betätigungshebels (120) ein ausgeweitetes Ende ist, wobei eine Breite des ausgeweiteten Endes (123) größer als der Rest des waagerechten Abschnitts (122) ist.

9. Anordnung (1), umfassend zwei Schienen (2), die zueinander parallel sind, eine bewegliche landwirtschaftliche Struktur (20), ein Portal (10), das die bewegliche landwirtschaftliche Struktur (20) trägt und entlang der Schienen (2) in einer Längsrichtung (X) translationsmäßig beweglich ist, und mindestens ein Verriegelungssystem (100) nach einem der vorhergehenden Ansprüche, wobei die Sperrklinke (110) im Verhältnis zu dem Portal (10) drehbeweglich befestigt ist.

10. Anordnung (1) nach Anspruch 9, wobei das Portal (10) eine erste Längsstütze (11) umfasst, die mit einer der beiden Schienen (2) zusammenwirkt, wobei sie dazu geeignet ist, im Verhältnis zu der Schiene (2) translationsmäßig verschoben zu werden, wobei der Betätigungshebel (120) an einem feststehenden Träger (130) beweglich befestigt ist, wobei der feststehende Träger (130) und die Sperrklinke (110) an der waagerechten Stütze (11) befestigt sind.

11. Anordnung (1) nach Anspruch 10, wobei das Portal (10) eine zweite Längsstütze (12) umfasst, die zu der ersten Längsstütze (11) parallel ist und ein erstes, ein zweites und ein drittes Verkeilungsmittel (141, 142, 143) umfasst, die dazu geeignet sind, einen Abschnitt des Betätigungshebels (120) aufzunehmen, wenn sich dieser jeweils in seiner ersten, seiner zweiten und seiner dritten Position befindet.

12. Anordnung (1) nach einem der Ansprüche 9 bis 11, wobei die bewegliche landwirtschaftliche Struktur (20) eine Schubstange eines Treibgangs ist.

13. Verfahren zum Verriegeln einer beweglichen landwirtschaftlichen Struktur (20), das ein Verriegelungssystem (100) nach einem der Ansprüche 1 bis 8 verwendet, wobei das Verfahren das Verschieben der beweglichen landwirtschaftlichen Struktur (20) in einer Längsrichtung (X) entlang mindestens einer Schiene (2) und das Verriegeln der beweglichen landwirtschaftlichen Struktur (20) durch Betätigen des Betätigungshebels (120) in seine erste Position, um ein Verschieben der beweglichen landwirtschaftlichen Struktur (20) entlang der Schiene (2) in einer ersten Verschiebungsrichtung (S1) zu ermöglichen und ihre Verschiebung in einer zweiten Verschiebungsrichtung (S2), die zu der ersten Richtung (S1) entgegengesetzt ist, zu blockieren, oder in seine zweite Position, um die Verschiebung der beweglichen landwirtschaftlichen Struktur (20) entlang du Schiene (2) in der zweiten Verschiebungsrichtung (S2) zu ermöglichen und ihre Bewegung in der ersten Richtung (S1) zu blockieren, umfasst.

14. Verfahren nach Anspruch 13, wobei das Betätigen des Betätigungshebels (120) das Drücken eines senkrechten Abschnitts (121) des Betätigungshebels (120) nach oben in einer senkrechten Richtung (Z), die zu der Längsrichtung (X) rechtwinklig ist, umfasst, um einen waagerechten Abschnitt (122) des Betätigungshebels (120) aus einem von dem ersten oder dem zweiten Verkeilungsmittel (141, 142) zu entnehmen, dann den Betätigungshebel (120) in der Längsrichtung (X) zu dem anderen von dem ersten oder dem zweiten Verkeilungsmittel (141, 142) zu verschieben, dann den Betätigungshebel (120) loszulassen, um den waagerechten Abschnitt (122) des Betätigungshebels (120) in dem anderen von dem ersten oder dem zweiten Verkeilungsmittel (141, 142) zu positionieren.

## Claims

1. A locking system (100) for a movable agricultural structure (20) able to move in a longitudinal direction (X) along at least one rail (2), the locking system (100) being configured to be secured in displacement to the movable agricultural structure (20), **characterized by**:
at least one ratchet (110) able to cooperate with orifices (22) distributed along the rail (2), the ratchet (110) comprising a first longitudinal rim (111) and a second longitudinal rim (112), and being configured to pivot about a first axis of rotation (R1), the locking system (100) comprising an actuating lever (120) movable between a first position in which it is able to limit a rotation of the ratchet (110) in a counterclockwise direction (SIH) by contact of the second rim (112) against the actuating lever (120) during the rotation in the counterclockwise direction (SIH), and a second position in which it is able to limit a rotation of the ratchet (110) in a clockwise direction (SH) by contact of the first rim (111) against the actuating lever (120) during the rotation in the clockwise direction (SH).

2. The locking system (100) according to claim 1, wherein the actuating lever (120) is movably fixed to a fixed support (130) of the locking system and is able to move from its first position to its second position by pivoting relative to the fixed support (130), about a second axis of rotation (R2) transverse to the first axis of rotation (R1) of the ratchet (110).

3. The locking system (100) according to claim 2, comprising a first wedging means (141) able to receive a portion of the actuating lever (120) when the latter is in its first position, and a second wedging means (142) able to receive the portion of the actuating lever (120) when the latter is in its second position, the first and the second wedging means (141, 142) being able to limit a rotation of the actuating lever (120) about the second axis of rotation (R2).

4. The locking system (100) according to claim 2 or 3, wherein the fixed support (130) comprises a holding plate (132) fixed to a base (131) of the fixed support (130), a portion of the actuating lever (120) being housed in a space formed between the holding plate (132) and the base (131) of the fixed support (130), the holding plate (132) being able to limit an upward movement of the portion of the actuating lever (120).

5. The locking system (100) according to any one of claims 1 to 4, wherein the actuating lever (120) is able to be positioned in a third position in which it is able to limit a rotation of the ratchet (110) both in the clockwise direction (SH) and in the counterclockwise direction (SIH).

6. The locking system (100) according to any one of claims 1 to 5, wherein the ratchet (110) comprises a thinned portion (113) able to penetrate at least partly into the orifices (22) of the rail (2), and an enlarged portion (114) able to cooperate with one end (123) of the actuating lever (120) and comprising the first longitudinal rim (111) and the second longitudinal rim (112).

7. The locking system (100) according to any one of claims 1 to 6, wherein the actuating lever (120) comprises a vertical portion (121) comprising an actuating handle (124), and a horizontal portion (122) whose end (123) is able to cooperate with the ratchet (110).

8. The locking system (100) according to claim 7, wherein the end (123) of the horizontal portion (122) of the actuating lever (120) is a flared end, a width of the flared end (123) being greater than the rest of said horizontal portion (122).

9. An assembly (1) comprising two parallel rails (2), a movable agricultural structure (20), a gantry (10) carrying the movable agricultural structure (20) and being movable in translation along the rails (2) in a longitudinal direction (X), and at least one locking system (100) according to any one of the preceding claims, the ratchet (110) being movably fixed in rotation relative to said gantry (10).

10. The assembly (1) according to claim 9, wherein the gantry (10) comprises a first longitudinal post (11) cooperating with one of the two rails (2) by being able to translate relative to said rail (2), the actuating lever (120) being movably fixed to a fixed support (130), the fixed support (130) and the ratchet (110) being fixed to said first horizontal post (11).

11. The assembly (1) according to claim 10, wherein the gantry (10) comprises a second longitudinal post (12) parallel to the first longitudinal post (11) and comprising a first, a second and a third wedging means (141, 142, 143) able to receive a portion of the actuating lever (120) when the latter is respectively in its first, second and third positions.

12. The assembly (1) according to any one of claims 9 to 11, wherein the movable agricultural structure (20) is a working chute forcing gate.

13. A method for locking a movable agricultural structure (20) using a locking system (100) according to any one of claims 1 to 8, the method comprising the displacement of the movable agricultural structure (20) in a longitudinal direction (X) along at least one rail (2), and the locking of the movable agricultural structure (20) by actuating the actuating lever (120) in its first position so as to allow a displacement of the movable agricultural structure (20) along the rail (2) in a first direction (S1) of displacement and to block its displacement in a second direction (S2) of displacement opposite to the first direction (S1), or in its second position so as to allow the displacement of the movable agricultural structure (20) along the rail (2) in the second direction (S2) of displacement and to block its displacement in the first direction (S1).

14. The method according to claim 13, wherein the actuation of the actuating lever (120) comprises the fact of pushing a vertical portion (121) of the actuating lever (120) upwards in a vertical direction (Z) perpendicular to the longitudinal direction (X) so as to extract a horizontal portion (122) of the actuating lever (120) from one of a first or second wedging means (141, 142), then of moving the actuating lever (120) in the longitudinal direction (X) towards the other of the first or second wedging means (141, 142), and then to release the actuating lever (120) so as to position the horizontal portion (122) of the actuating lever (120) in said other of the first or second wedging means (141, 142).
